# EUROPÄISCHE PATENTSCHRIFT

(11) **EP 1 960 147 B1**
(45) Veröffentlichungstag und Bekanntmachung des Hinweises auf die Patenterteilung: **23.02.2011**
(21) Anmeldenummer: 06817466.3
(22) Anmeldetag: 28.11.2006
(51) Int. Cl.: B23K 9/00, B23K 9/12, B23K 9/29, B23K 9/26

(54) **SCHWEISSBRENNER UND KONTAKTROHR SOWIE KONTAKTIERSYSTEM FÜR EINEN SCHWEISSBRENNER**
WELDING TORCH AND CONTACT TUBE AND ALSO CONTACT SYSTEM FOR A WELDING TORCH
CHALUMEAU DE SOUDAGE ET TUBE DE CONTACT AINSI QUE SYSTÈM DE CONTACT POUR CHALUMEAU DE SOUDAGE

(30) Priorität: 12.12.2005 AT 19772005
(43) Veröffentlichungstag der Anmeldung: 27.08.2008
(73) Patentinhaber: Fronius International GmbH, 4643 Pettenbach (AT)
(72) Erfinder: ARTELSMAIR, Josef, A-4552 Wartberg/Krems (AT); LEONHARTSBERGER, Andreas, A-4490 St. Florian/Linz (AT); KAZMAIER, Jörg, 77743 Neuried-I. (DE)
(74) Vertreter: Sonn & Partner Patentanwälte
(86) Internationale Anmeldenummer: PCT/AT2006/000488
(87) Internationale Veröffentlichungsnummer: WO 2007/068012

(56) Entgegenhaltungen:
- DE-A1- 10 200 942
- DE-U1- 20 214 561

## Beschreibung

Die Erfindung betrifft einen Schweißbrenner mit einem Brennerkörper, in dem zumindest eine Vorrichtung zur Zuführung eines Schweißdrahts und ein Kontaktrohr mit einer Bohrung und einer konzentrisch dazu verlaufenden Führungsbohrung zur Führung des Schweißdrahts in Richtung eines Werkstückes angeordnet ist, wobei der Schweißdraht über das Kontaktrohr mit elektrischer Energie versorgbar ist, wobei ein Ende der Zuführvorrichtung in der Führungsbohrung des Kontaktrohres angeordnet und mit einem elektrisch leitfähigen Endstück mit einer Bohrung für den Schweißdraht versehen ist.

Ebenso betrifft die Erfindung ein aus einem Endstück und einem Kontaktrohr gebildetes Kontaktiersystem, wobei das Endstück mit einer Bohrung und das Kontaktrohr mit einer Führungsbohrung zur Führung eines Schweißdrahtes versehen ist.

Des Weiteren betrifft die Erfindung auch ein Kontaktrohr mit einer Bohrung für den Schweißdraht und einer Führungsbohrung zur Aufnahme des zugeführten Schweißdrahtes und Weiterleitung an die Bohrung.

Bekannt sind Schweißbrenner mit einem im Wesentlichen daran befestigten Kontaktrohr, in welchem ein elektrischer Kontakt mit einem durch eine Innenbohrung des Kontaktrohres zugeführten Schweißdraht hergestellt wird. Hierbei wird der Schweißdraht durch eine so genannte Seele zum Schweißbrenner geführt, wobei ein Ende der Seele bevorzugt von einer Bohrung im Kontaktrohr aufgenommen wird. Im Kontaktrohr ist die Bohrung für das Ende der Seele mit der Innenbohrung für den Schweißdraht verbunden, so dass der Schweißdraht von der Seele in die Innenbohrung geleitet und kontaktiert werden kann.

Nachteilig ist hierbei, dass der durch die Förderung des Schweißdrahtes entstehende Abrieb direkt von der Seele in die Innenbohrung des Kontaktrohres gefördert wird und dort ein so genanntes "Zuwachsen" und somit eine Verringerung des Durchmessers der Bohrung des Kontaktrohres bewirkt. Dies hat zur Folge, dass das Kontaktrohr regelmäßig gewechselt bzw. gereinigt werden muss. Ebenso ist nachteilig, dass der Drall, welchen der zugeführte Schweißdraht aufweist, durch die üblicherweise starre Fixierung des Endes der Seele in der Bohrung des Kontaktrohres nicht ausgeglichen werden kann. Dadurch wird gegebenenfalls die Förderkraft für den Schweißdraht erhöht, was sich negativ auf die Qualität der Schweißnaht auswirkt, zusätzlichen Abrieb verursacht und somit das Zuwachsen der Innenbohrung beschleunigt.

Die DE 102 00 942 A1 zeigt einen Schweißbrenner mit einem Kontaktrohr mit einer Bohrung zur Führung eines Schweißdrahtes in Richtung eines Werkstücks. Der Schweißdraht wird über das Kontaktrohr mit elektrischer Energie versorgt. Weiters ist eine Vorrichtung zur Zuführung des Schweißdrahtes vorgesehen mit einem Endstück, welches mit einer konisch geformten Spitze versehen ist, welche mit einer konisch geformten Aufweitung der Bohrung des Kontaktrohres zusammenwirkt. Der konische Kontakt stellt sicher, dass die Führungsvorrichtung in ihrem dem Kontaktrohr benachbarten Ende hoch genau kolinear zum Kontaktrohr ausgerichtet ist.

Aus der WO 99/30863 A1 ist bekannt, dass an jenem Ende einer Führungsvorrichtung für einen Schweißdraht, welches von einem Kontaktrohr aufgenommen wird, ein Übergangsstück befestigt wird. Dieses Übergangsstück hat die Aufgabe, den Schweißdraht entsprechend auszurichten, so dass dieser nur mehr mit einer geringen so genannten Dressur in eine Bohrung des Kontaktrohres übergeht.

Auch die US 6 495 798 B1 zeigt einen Übergang einer Führungsvorrichtung für den Schweißdraht zu einem Kontaktrohr, bei dem der Abrieb des Schweißdrahtes relativ groß ist, so dass ein Auswechseln des Kontaktrohres relativ häufig notwendig ist.

Schließlich zeigt die WO 2003/039800 A1 ein Kontaktrohr mit einer Bohrung zur Führung des Schweißdrahtes, bei welchem ebenfalls keine Maßnahmen zur Verhinderung des so genannten "Zuwachsens" durch den Abrieb des Schweißdrahtes vorgesehen sind.

Nachteilig ist hierbei, dass das Übergangsstück fest mit dem Kontaktrohr verbunden ist, so dass beispielsweise eine erhöhte Dressur mehr Abrieb verursacht, da diese nicht ausgeglichen, sondern nur ausgerichtet werden kann. Der Abrieb lagert sich anschließend im Kontaktrohr ab und bewirkt somit ein Zuwachsen, wodurch die Standzeit des Kontaktrohres erheblich gesenkt wird. Ebenso ist nachteilig, dass das Übergangsstück aus einem nicht leitenden Material gebildet ist, wodurch es zu keiner so genannten Sekundärkontaktierung des Schweißdrahtes kommen kann. Somit wird das Risiko eines so genannten Festbrennens des Schweißdrahtes im Kontaktrohr erhöht.

Die Aufgabe der Erfindung liegt darin, einen oben genannten Schweißbrenner zu schaffen, bei dem die Haltbarkeit bzw. die Standzeit der Verschleißteile, insbesondere des Kontaktrohres, wesentlich verlängert wird. Eine weitere Aufgabe der Erfindung besteht in der Schaffung eines Endstückes und eines Kontaktrohres für einen solchen Schweißbrenner, welche möglichst lange Haltbarkeit und Standzeit aufweisen.

Die erste Aufgabe der Erfindung wird durch einen oben genannten Schweißbrenner gelöst, bei dem das Endstück der Zuführvorrichtung drehbar und schwenkbar in der Führungsbohrung des Kontaktrohres angeordnet ist.

Das elektrisch leitfähige Endstück der Zuführvorrichtung stellt eine Verlängerung des Kontaktrohres dar, wodurch die Standzeit des Kontaktrohres wesentlich verlängert wird. Dies wird hauptsächlich dadurch erreicht, dass sich ein Großteil des durch die Förderung des Schweißdrahtes entstehende Abriebs bereits in der Bohrung des Endstückes ablagert und somit kaum noch Ablagerungen in der Bohrung des Kontaktrohres auftreten, wodurch ein Zuwachsen bzw. eine Verringerung des Durchmessers der Bohrung des Kontaktrohres im Wesentlichen vermieden wird. Die elektrische Leitfähigkeit des Endstückes ist ein wesentlicher Vorteil, da damit eine zweite elektrisch leitende Verbindung, ein so genannter Sekundärkontakt mit geringem Übergangswiderstand zum Schweißdraht, hergestellt wird. Beim Versagen der Kontaktierung in der Bohrung des Kontaktrohres stellt diese zweite elektrisch leitende Verbindung die Strom-/Energieübertragung auf den Schweißdraht sicher. Hierbei ist zusätzlich von Vorteil, dass dadurch während eines Schweißprozesses die Strombelastung für das Kontaktrohr wesentlich reduziert wird. Durch die drehbare und schwenkbare Anordnung des Endstückes im Kontaktrohr wird erreicht, dass bei der Förderung des Schweißdrahtes das Endstück ausgelenkt wird, also eine Neigung gegenüber dem Kontaktrohr aufweist, wodurch sich ein Kurvenverlauf des Schweißdrahtes ausbildet und sich somit der Abrieb in diesem Bereich ablagert. Dadurch kann die Förderkraft des Schweißdrahtes verringert bzw. konstant gehalten werden. Dadurch passt sich das Endstück bzw. der Endbereich der Zuführvorrichtung an den Drall des Schweißdrahtes an.

Wenn zwischen dem Kontaktrohr und dem Endstück eine elektrische Verbindung gebildet wird, so dass im Endstück ein zusätzlicher Stromübergang auf den Schweißdraht mit einem geringen elektrischen Widerstand erfolgt, wird in vorteilhafter Weise erreicht, dass der Sekundärkontakt des Schweißdrahtes konzentriert im elektrisch leitfähigen Endstück erfolgt, wodurch die thermische Belastung der Zuführvorrichtung wesentlich minimiert wird.

Vorteilhafterweise weist die Zuführvorrichtung eine Innenbohrung zur Förderung des Schweißdrahtes auf, deren Durchmesser größer als der Durchmesser der Bohrung des Endstückes'ist und der Durchmesser der Bohrung des Kontaktrohres kleiner als jener der Bohrung des Endstückes ist. Dadurch, dass der Durchmesser der Bohrung des Endstückes auf den jeweilig verwendeten Durchmesser des Schweißdrahtes abgestimmt ist, wird ein automatisches Einfädeln erleichtert, da der Durchmesser der Bohrungen stufenförmig reduziert wird.

Gemäß einem weiteren Merkmal der Erfindung ist der Durchmesser der Bohrung des Endstückes zwischen 20 bis 50 Prozent, insbesondere 30 Prozent, größer als der Durchmesser des Schweißdrahtes.

Wenn die Zuführvorrichtung außermittig am Kontaktrohr angeordnet ist, so dass die Mittelachse der Bohrung des Endstückes gegenüber der Mittelachse der Bohrung des Kontaktrohres eine Neigung aufweist, kann in der Bohrung des Kontaktrohres ein sicherer Stromübergang auf den Schweißdraht erzielt werden.

Von Vorteil ist auch, dass das Endstück an einem Ende einen Übergang zur Aufnahme eines Endes der Zuführvorrichtung aufweist. Dadurch wird eine einfache Befestigung erreicht, da in einfacher Form der Übergang des Endstückes auf die Zuführvorrichtung aufgesteckt wird.

Hierbei sind die Durchmesserverhältnisse vorteilhafterweise derart ausgebildet, dass durch die Steckverbindung eine sichere Verbindung gewährleistet ist und diese mit einem geringen Kraftaufwand hergestellt werden kann.

Dabei kann die Verbindung zwischen dem Übergang des Endstückes und der Zuführvorrichtung fest oder lösbar ausgebildet sein. Durch den Einsatz einer lösbaren Verbindung, beispielsweise einer Schraubverbindung, wird in vorteilhafterweise erreicht, dass ein einfacher und schneller Wechsel des Endstückes ermög-licht wird.

Gemäß einem weiteren Merkmal der Erfindung weist das Endstück an jenem dem Übergang gegenüber liegenden Ende einen Steg auf. Dieser Steg kann als Zentrierring für die Führungsbohrung ausgebildet sein, wobei der Außendurchmesser des Stegs geringfügig kleiner als der Durchmesser der Führungsbohrung des Kontaktrohres ist. Dadurch wird ein reibungsarmer Übergang des Schweißdrahtes von der Bohrung des Endstückes in die Bohrung des Kontaktrohres gewährleistet.

Der Steg und der Übergang können durch ein Verbindungsstück miteinander verbunden sein.

Dabei weist das Verbindungsstück vorzugsweise einen geringeren Außendurchmesser als der Steg auf.

Der Außendurchmesser des Endstückes vom Übergang ist vorzugsweise in Richtung des Steges zum Verbindungsstück verjüngend ausgebildet.

Die Ausnehmung kann konisch in die Bohrung des Endstückes übergehen.

Dadurch, dass der Steg des Endstückes vollständig und ein Teilbereich des Verbindungsstückes des Endstückes in die Führungsbohrung des Kontaktrohres hinein ragt, wird ein entsprechender Freiraum in der Führungsbohrung geschaffen, so dass sich das Endstück entsprechend bewegen kann, insbesondere eine Drehbewegung bzw. eine Schwenkbewegung, ausführen kann. Hierbei sind der Steg und das Verbindungsstück mit der Führungsbohrung in elektrischer Verbindung, so dass durch die außermittige Anordnung der Zuführvorrichtung eine Schrägstellung bzw. die beschriebene Neigung des Endstückes in der Führungsbohrung des Kontaktrohres erreicht wird, wodurch eine sichere Kontaktstelle des Schweißdrahtes geschaffen wird, so dass ein Stromübergang vom Kontaktrohr auf das elektrisch leitende Endstück und entsprechend auf den Schweißdraht erfolgt. Somit wird erreicht, dass durch das elektrisch leitende Endstück eine bewegliche Verlängerung des Kontaktrohres geschaffen wird. Dies wäre mit einem aus dem Stand der Technik bekannten Kontaktrohr bzw. einem einteiligen Kontaktrohr nicht möglich.

Von Vorteil ist auch, dass die Zuführvorrichtung zumindest im Bereich der Befestigung am Endstück flexibel, insbesondere durch eine flexible Spirale, ausgebildet ist, da dadurch die Beweglichkeit des Endstückes in der Führungsbohrung erleichtert wird und ein Stromübergang vom Kontaktrohr bzw. Endstück auf den Schweißdraht sichergestellt ist. Dadurch ist auch eine außermittige Anordnung der Zuführvorrichtung möglich, da durch die flexible Ausbildung des Endbereiches eine leichte Ablenkung bzw. Drehbewegung des Endstückes im Kontaktrohr erleichtert wird.

Die Zuführvorrichtung ist zumindest im Bereich der Befestigung am Endstück durch ein Material mit einem hohen thermischen Widerstand gebildet. Dadurch kann eine thermische Isolation des Endstückes und der Zuführvorrichtung erreicht werden und damit eine thermische Zerstörung der Zuführvorrichtung, welche beispielsweise aus Kunststoff oder Graphit bestehen kann, verhindert werden.

Die Aufgabe der Erfindung wird auch durch ein oben genanntes Kontaktiersystem gelöst, wobei das Kontaktrohr eine im Wesentliche kugelförmige Ausbuchtung aufweist, und das der Führungsbohrung des Kontaktrohres zugewandte Ende des Endstücks für eine drehbare und schwenkbare Verbindung in der Führungsbohrung des Kontaktrohres ausgebildet ist.

Das Ende des Endstücks ist vorteilhafterweise in Form einer Kugel ausgebildet.

Die sich daraus ergebenden Vorteile können aus den bereits beschriebenen Vorteilen entnommen werden.

Die Aufgabe der Erfindung wird auch durch ein oben genanntes Kontaktrohr gelöst, wobei der Übergang zwischen der Führungsbohrung und der Bohrung durch eine Ausbuchtung zur drehbaren und schwenkbaren Aufnahme eines Endstücks einer Vorrichtung zur Zuführung eines Schweißdrahtes ausgebildet ist.

Die Ausbuchtung kann dabei kugelförmig ausgebildet sein, so dass das Endstück mit einer Kugel an einem Ende in die Ausbuchtung passt.

Dabei ist der Durchmesser der Kugel des Endstücks geringfügig kleiner als der Durchmesser der Ausbuchtung im Kontaktrohr.

Das Endstück weist vorteilhafterweise die oben genannten Merkmale auf.

Die sich daraus ergebenden Vorteile können aus den bereits beschriebenen Vorteilen entnommen werden.

Die Aufgabe der Erfindung wird auch durch ein oben genanntes Kontaktrohr gelöst, wobei der Übergang zwischen der Führungsbohrung und der Bohrung durch eine Ausbuchtung zur Aufnahme eines Endstücks einer Vorrichtung zur Zuführung eines Schweißdrahtes ausgebildet ist.

Die Ausbuchtung kann dabei kugelförmig ausgebildet sein, so dass das Endstück mit einer Kugel an einem Ende in die Ausbuchtung passt.

Dabei ist der Durchmesser der Kugel des Endstücks geringfügig kleiner als der Durchmesser der Ausbuchtung im Kontaktrohr.

Das Endstück weist vorteilhafterweise die oben genannten Merkmale auf.

Die sich hieraus ergebenden Vorteile können ebenso aus den bereits beschriebenen Vorteilen entnommen werden.

Die vorliegende Erfindung wird anhand der beigefügten, schematischen Zeichnungen näher erläutert.

Darin zeigen:
Fig. 1 eine schematische Darstellung einer Schweißmaschine bzw. eines Schweißgerätes;
Fig. 2 eine schematische Darstellung eines Schweißbrenners, in Seitenansicht;
Fig. 3 den Schweißbrenner gemäß Fig. 2 in Explosionsdarstellung;
Fig. 4 eine geschnittene, schematische Darstellung eines Kontaktrohres;
Fig. 5 das erfindungsgemäße Endstück in geschnittener, schematischer Darstellung;
Fig. 6 die geschnittene, schematische Darstellung einer Zuführvorrichtung mit dem erfindungsgemäßen Endstück im Kontaktrohr;
Fig. 7 die geschnittene, schematische Darstellung eines Brennerkörpers eines Schweißbrenners mit einer darin angeordneten Zuführvorrichtung mit dem erfindungsgemäßen Endstück im Kontaktrohr während eines Schweißprozesses;
Fig. 8 die schematische Darstellung einer Zuführvorrichtung während eines Schweißprozesses im Kontaktrohr mit dem erfindungsgemäßen Endstück;
Fig. 9 eine weitere schematische Darstellung einer Zuführvorrichtung mit dem erfindungsgemäßen Endstück im Kontaktrohr während eines Schweißprozesses;
Fig. 10 ein weiteres Ausführungsbeispiel des Endstücks als Teil des Kontaktrohres in schematischer Darstellung; und
Fig. 11 das Endstück als Teil des Kontaktrohres gemäß Fig. 10 in zusammengestelltem Zustand.

Einführend wird festgehalten, dass gleiche Teile des Ausführungsbeispiels mit gleichen Bezugszeichen versehen werden.

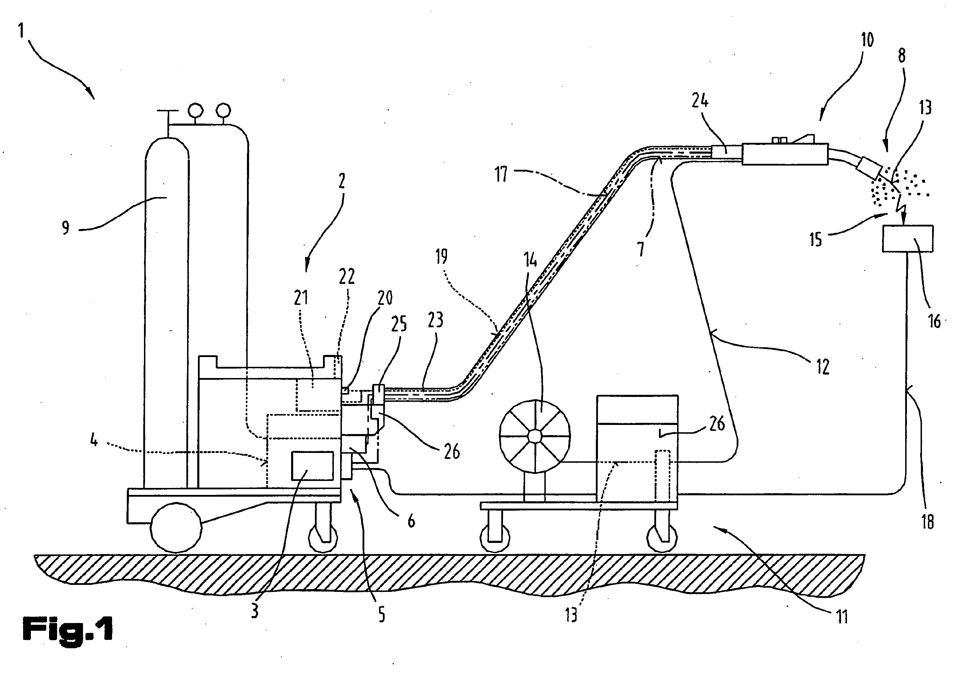

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist. Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

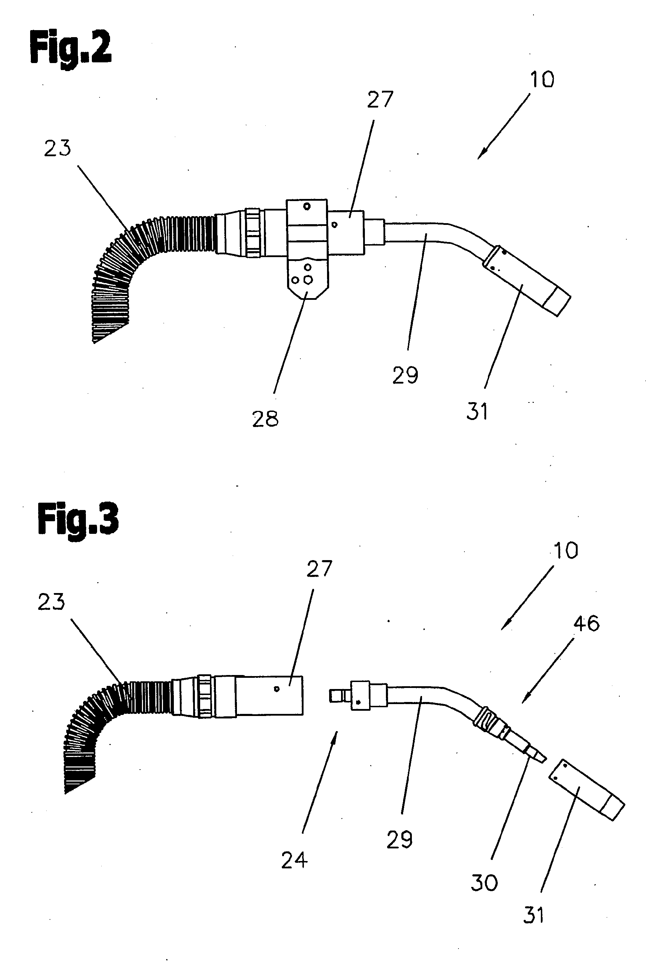

In den Fig. 2 und 3 ist ein stark vereinfachter Aufbau eines durch einen handelsüblichen MIG-Brenner gebildeten Schweißbrenners 10 dargestellt. Dabei zeigt Fig. 2 den Schweißbrenner 10 in zusammengebautem Zustand mit einer an einem Halteteil 27 bzw. Brennergriff angeordneten Halterung 28 für einen maschinellen Einsatz, insbesondere einer Roboterschweißanlage, die bei einem handgeführten Schweißbrenner 10 entfallen kann. Fig. 3 zeigt eine Explosionsdarstellung der wesentlichen Komponenten des Schweißbrenners 10, nämlich dem Schlauchpaket 23, dem Halteteil 27, einem Rohrbogen 29, einem Brennerkörper 46, einem Kontaktrohr 30 und einer Gasdüse 31.

Das Schlauchpaket 23 wird über eine Kupplungsvorrichtung 24 mit dem Rohrbogen 29 verbunden. Der Halteteil 27 ist als Bestandteil des Schlauchpakets 23 ausgebildet. Selbstverständlich kann der Halteteil 27 auch als Bestandteil des Rohrbogens 29 ausgebildet sein und das Schlauchpaket 23 über eine Kupplungsvorrichtung 24 mit dem Halteteil 27 bzw. einer Brennerschale oder Brennergriff und der Rohrbogen 29 fix mit dem Halteteil 27 verbunden werden. Der Rohrbogen kann auch über die Kupplungsvorrichtung 24 oder eine andere aus dem Stand der Technik bekannte Kupplung mit dem Halteteil 27 verbunden werden.

Der Rohrbogen 29 beinhaltet unter anderem Kühlkanäle, Versorgungsleitungen für die elektrische Energie, Versorgungsleitungen für das Gas 8 und insbesondere eine Zuführvorrichtung 32 für den Schweißdraht 13, die so genannte Seele, welche dem Rohrborgen 29 über das Schlauchpaket 23 zugeführt wird.

Bevorzugt ist die Zuführvorrichtung 32 im Schlauchpaket 23 angeordnet und ersetzt somit die Versorgungsleitung 12 aus Fig. 1. Somit übernimmt die Zuführvorrichtung 32 den Schweißdraht 13 an der Zugentlastungsvorrichtung 25, an welcher das Schlauchpaket 23 angeschlossen ist, und führt diesen bis zu einem Kontaktrohr 30 im Schweißbrenner 10. Die Zuführvorrichtung 32 weist eine Innenbohrung 41 auf, durch welche der Schweißdraht 13 vom Drahtvorschubgerät 11 zum Kontaktrohr 30 befördert wird. Im Kontaktrohr 30 wird der Schweißdraht 13 mit elektrischer Energie versorgt, so dass ein Schweißprozess durchgeführt werden kann.

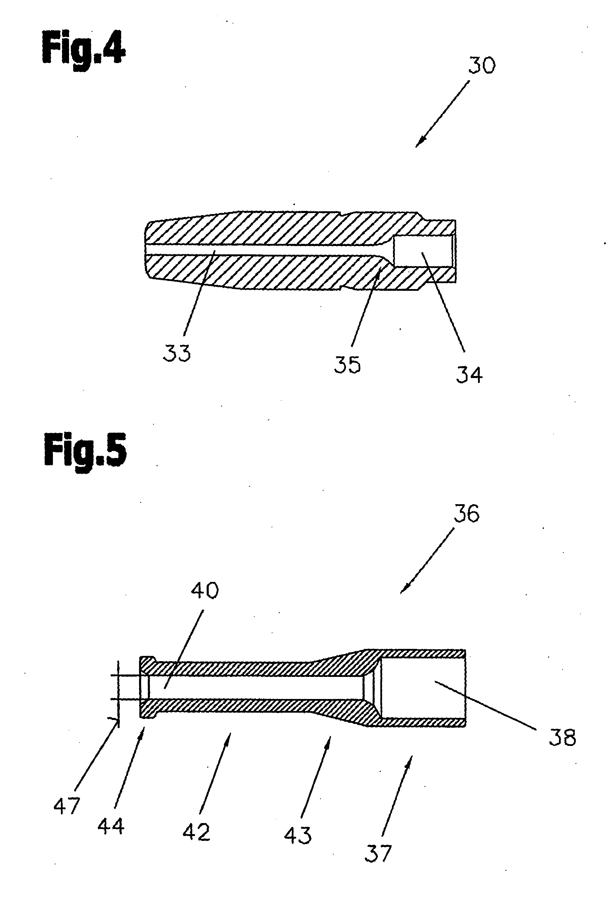

Gemäß Fig. 4 weist das Kontaktrohr 30 eine für den Schweißdraht 13 angeordnete Bohrung 33 und eine für die Zuführvorrichtung 32 aufweisende Führungsbohrung 34 auf. Der Durchmesser der Bohrung 33 ist im Wesentlichen auf den Durchmesser des Schweißdrahtes 13 und der Durchmesser der Führungsbohrung 34 im Wesentlichen auf den Außendurchmesser 39 der Zuführvorrichtung 32 abgestimmt. Dadurch kann die Zuführvorrichtung 32 in die Führungsbohrung 34 des Kontaktrohres 30 eingeschoben werden bzw. in diese eindringen, so dass eine exakte Ausrichtung der Bohrung 40 des Endstückes 36 der Zuführvorrichtung 32 zum Kontaktrohr 30 gegeben ist. Somit geht der Schweißdraht 13 beim Austritt aus dem Endstück 36 der Zuführvorrichtung 32 reibungsarm und zentrisch in die Bohrung 33 des Kontaktrohres 30 über. Zusätzlich kann der Übergang von der Führungsbohrung 34 zur Bohrung 33 durch eine konische Verjüngung 35 gebildet werden, wodurch scharfe Kanten vermieden werden und die Einführung des Schweißdrahtes 13 erleichtert wird.

Das Kontaktrohr 30 ist aus einem elektrisch leitfähigen Material, beispielsweise Kupfer, gefertigt und bevorzugt am Brennerkörper 46 befestigt. Dies erfolgt beispielsweise über eine Schraubverbindung. Beim Aktivieren eines Schweißprozesses wird das Kontaktrohr 30 mit elektrischer Energie versorgt. Dadurch dass der Schweißdraht 13 in der Bohrung 33 das Kontaktrohr 30 berührt, wird dieses mit elektrischer Energie versorgt. Dadurch, kann mit Hilfe bekannter Zündverfahren, wie beispielsweise der Kontaktzündung, der Lichtbogen 15 zwischen Schweißdraht 13 und Werkstück 16 gezündet und der Schweißprozess durchgeführt werden.

Für einen Schweißprozess mit abschmelzender Elektrode bzw. Schweißdraht 13 ist eine Förderung des Schweißdrahtes 13 über die Zuführvorrichtung 32 erforderlich. Dabei kann der Schweißdraht 13 kontinuierlich oder auch diskontinuierlich, wie dies beim bekannten CMT-Verfahren der Fall ist, gefördert werden. Durch das Fördern des Schweißdrahtes 13 durch das Schlauchpaket 23 bzw. die Zuführvorrichtung 32 entsteht ein unvermeidlicher Abrieb des Schweißdrahtes 13. Die Menge dieses entstehenden Abriebs ist hauptsächlich von der durch das Drahtvorschubgerät 11 auf den Schweißdraht 13 übertragenen Kraft und der geförderten Länge des Schweißdrahtes 13 abhängig. Der Abrieb kommt mit dem Kontaktrohr 30 in Berührung, sobald der Schweißdraht 13 in der Führungsbohrung 34 die Zuführvorrichtung 32 verlässt, insbesondere in der Bohrung 33 des Kontaktrohres 30. In weiterer Folge bewirkt der Abrieb in bekannter Weise ein so genanntes "Zuwachsen" des Kontaktrohres 30. Dieses "Zuwachsen" bewirkt insbesondere eine Verringerung des Durchmessers der Bohrung 33.

Mit fortlaufendem Schweißprozess wird also der Durchmesser der Bohrung 33 verringert. Dies kann dazu führen, dass die Förderkraft für den Schweißdraht 13 erhöht werden muss, was zu einem so genannten "Festbrennen" des Schweißdrahtes 13 in der Bohrung 33 oder einem Steckenbleiben des Schweißdrahtes 13 in der Bohrung 33 führen kann. Damit die Qualität der Schweißnaht dadurch nicht beeinträchtigt wird, muss der Schweißprozess unterbrochen und das Kontaktrohr 30 gereinigt bzw. bevorzugt gewechselt werden.

Erfindungsgemäß wird das Kontaktrohr 30 durch ein Kontaktiersystem ersetzt, welches aus einem an einem Ende der Zuführvorrichtung 32 befestigten Endstück 36 und dem Kontaktrohr 30 gebildet ist. Dieses Endstück 36 wird also von der Führungsbohrung 34 aufgenommen und bewirkt im Wesentlichen eine Verlängerung des Kontaktrohres 30. Bevorzugt ist das Endstück 36 aus jenem Material gefertigt, aus welchem das verwendete Kontaktrohr 30 gefertigt ist.

Das erfindungsgemäße Kontaktiersystem ist nachfolgend in den Figuren 5 bis 9 schematisch dargestellt.

Das Endstück 36 ist in Fig. 5, anhand einer schematischen Schnittdarstellung, dargestellt. Demnach weist das Endstück 36 an einem Ende einen Übergang 37 zur Zuführvorrichtung 32 auf. Über diesen Übergang 37 wird das Endstück 36 mit der Zuführvorrichtung 32 verbunden. Zu diesem Zweck weist der Übergang 37 eine im Wesentlichen zylindrische Ausnehmung 38 auf, dessen Durchmesser im Wesentlichen dem Außendurchmesser 39 der Zuführvorrichtung 32 entspricht. Ebenso ist die Ausnehmung 38 im Wesentlichen korrespondierend zum Ende der Zuführvorrichtung 32 ausgeführt, so dass der Übergang 37 die Zuführvorrichtung 32 aufnehmen kann und diese entsprechend befestigt werden kann. Bevorzugt wird das Endstück 36 über den Übergang 37 über eine Pressverbindung am Ende der Zuführvorrichtung 32 befestigt. Ebenso kann die Befestigung des Endstückes 36 auch über eine lösbare Verbindung, insbesondere eine Schraubverbindung, erfolgen.

Durch die Befestigung des Endstückes 36 an der Zuführvorrichtung 32 kann der Schweißdraht 13 über eine Bohrung 40 das Endstück 36 passieren und vom Kontaktrohr 30 aufgenommen werden. Hierbei geht die Ausnehmung 38 bevorzugt konisch in die Bohrung 40 über, so dass der Übergang des Schweißdrahtes 13 von der Zuführvorrichtung 32 in die Bohrung 40 reibungsarm bzw. gleitend stattfindet und ein zusätzlicher Abrieb des Schweißdrahtes 13 reduziert wird. Des Weiteren ist der Durchmesser der Bohrung 40 vorzugsweise kleiner als der Durchmesser der Innenbohrung 41 der Zuführvorrichtung 32.

Ebenso wie der konische Übergang im Inneren des Endstückes 36, von der Ausnehmung 38 auf die Bohrung 40, erfolgt der Übergang im Außenbereich des Endstückes 36, vom Übergang 37 auf ein Verbindungsstück 42, vorzugsweise über eine konische Verjüngung 43. Der Außendurchmesser des Verbindungsstückes 42 ist bevorzugt geringer als der Durchmesser der Führungsbohrung 34 des Kontaktrohres 30. Des Weiteren kann das freie Ende des Verbindungsstückes 42 mit einem Steg 44 versehen sein. Hierbei weist der Steg 44 einen Außendurchmesser auf, welcher im Wesentlichen dem Durchmesser der Führungsbohrung 34 entspricht bzw. geringfügig kleiner ist. Somit entsteht zwischen dem Endstück 36 und der Führungsbohrung 34 des Kontaktrohres 30 ein Zwischenraum, wodurch das Endstück 36 in der Führungsbohrung 34 beweglich ist.

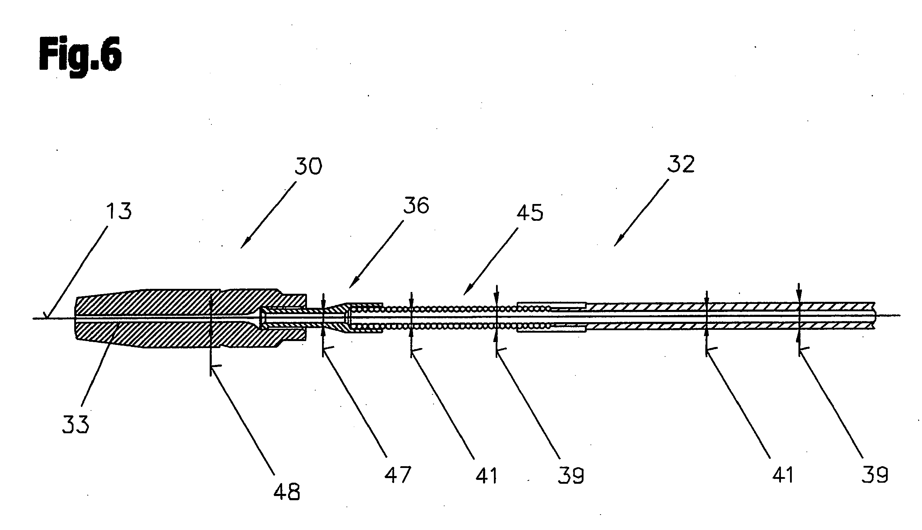

Das Kontaktrohr 30 kann somit das Verbindungsstück 42 des Endstückes 36, an welchem die Zuführvorrichtung 32 befestigt ist, aufnehmen, wie dies in Fig. 6 dargestellt ist. Dabei wird nur ein Teilbereich des Verbindungsstückes 42, beispielsweise drei Viertel, von der Führungsbohrung'34 des Kontaktrohres 30 aufgenommen, wodurch das Endstück 36 in der Führungsbohrung 34 beweglich ist. Der Durchmesser der Bohrungen, in denen der Schweißdraht 13 geführt wird, also der Durchmesser der Innenbohrung 41, der Durchmesser 47 der Bohrung 40 und der Durchmesser 48 der Bohrung 33 werden in Förderrichtung immer kleiner. Die Bohrung 33 des Kontaktrohres 30 weist den geringsten Durchmesser 48 auf, welcher üblicherweise nur geringfügig größer als der Durchmesser des Schweißdrahtes 13 ist. Der Durchmesser der Innenbohrung 41 der Zuführvorrichtung 32 ist üblicherweise größer als der Durchmesser 48 der Bohrung 33 im Kontaktrohr 30. Der Durchmesser 47 der Bohrung 40 des Endstückes 36 liegt zwischen dem Durchmesser der Innenbohrung 41 der Zuführvorrichtung 32 und dem Durchmesser 48 der Bohrung 33. Des Weiteren sind die Durchmesser entsprechend auf den Durchmesser des Schweißdrahtes 13 abgestimmt, wobei der Durchmesser der Bohrung 40 des Endstückes 36 bevorzugt um 20 bis 50 Prozent, insbesondere 30 Prozent, größer als der Durchmesser des Schweißdrahtes 13 ist.

Der durch die Förderung des Schweißdrahtes 13 in der Zuführvorrichtung 32 entstehende Abrieb des Schweißdrahtes 13 legt sich bevorzugt in der Bohrung 40 des Endstückes 36 ab.

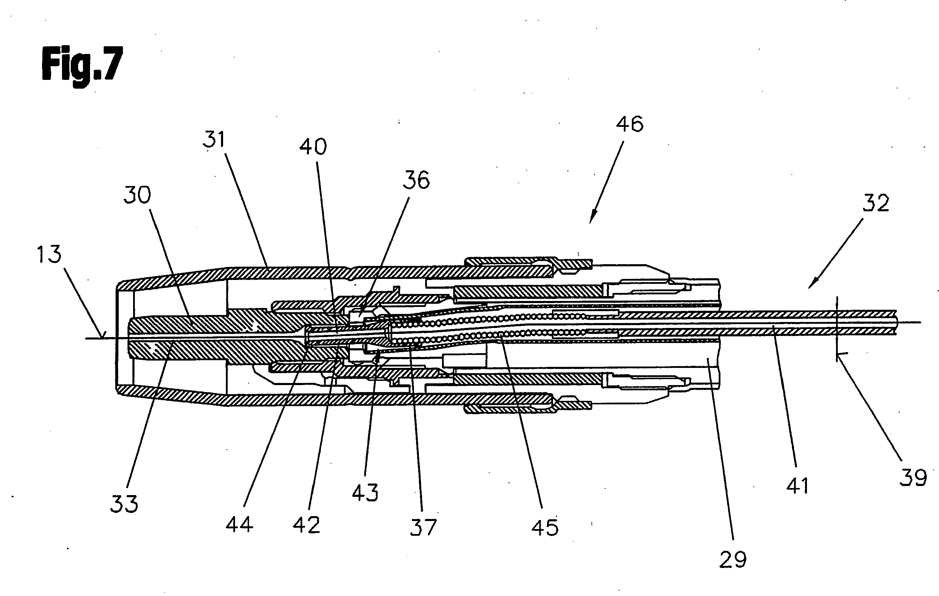

Dies wird dadurch unterstützt, dass die Zuführung der Zuführvorrichtung 32 außermittig der Mittelachse der Bohrung 33 des Kontaktrohres 30, erfolgt, wie dies anhand der Fig. 7 bis 9 dargestellt ist. Dabei steht die Bohrung 40 des Endstückes 36 im Wesentlichen in einer gewissen Neigung zur Bohrung 33 des Kontaktrohres 30, was sich aus der außermittigen Zuführung der Zuführvorrichtung 32 ergibt. Somit ergibt sich im Bereich der Endstückes 36 ein Kurvenverlauf der Zuführvorrichtung 32 und somit des Schweißdrahtes 13, im Wesentlichen die Ablagerung des Abriebes in der Bohrung 40 des Endstückes 36 bewirkt bzw. unterstützt wird.

Die Ablagerung des Abriebes wird zusätzlich dadurch unterstützt, dass das Endstück 36 aus dem gleichem Material wie das Kontaktrohr 30 gefertigt ist. Somit gelangt kaum ein Abrieb in die Bohrung 33 des Kontaktrohres 30, wodurch dessen Haltbarkeit bzw. Standzeit wesentlich verlängert wird, ohne dass die Schweißqualität verschlechtert wird. Somit wird das bekannte "Zuwachsen" des Kontaktrohres 30 in das Endstück 36 verlagert. Da jedoch im Endstück 36 durch den größeren Durchmesser 47 der Bohrung 40, im Vergleich zum Durchmesser 48 der Bohrung 33 des Kontaktrohres 30, mehr Platz für den Abrieb vorhanden ist, hat der Abrieb im Endstück 36 wenige negative Auswirkungen auf den Schweißprozess. Des Weiteren hat das so genannte "Zuwachsen" im Endstück 36 weniger negative Auswirkungen auf die Förderung des Schweißdrahtes 13, wodurch die Förderkraft des Schweißdrahtes 13 annähernd konstant gehalten werden kann und die Qualität der Schweißnaht annähernd konstant bleibt.

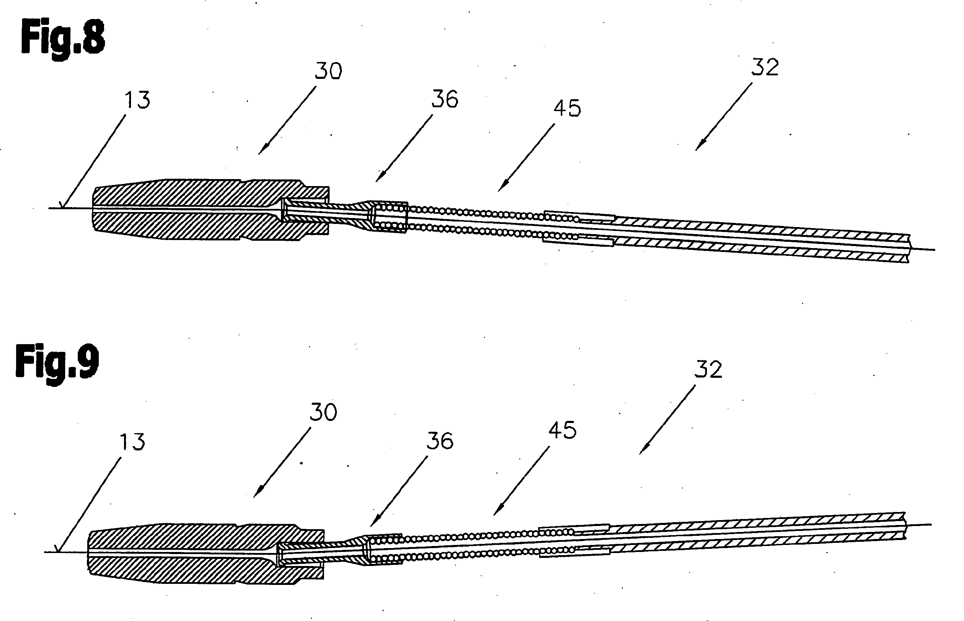

Des Weiteren bewirkt das Endstück 36 eine so genannte Zwangskontaktierung des Schweißdrahtes 13 in der Bohrung 33 des Kontaktrohres 30, wie dies insbesondere aus den Fig. 8 und 9 ersichtlich ist. Die Zwangskontaktierung wird im Wesentlichen durch den Kurvenverlauf der Zuführvorrichtung 32 im Bereich des Endstückes 36 erreicht, wodurch der Schweißdraht 13 zwangsweise und gezielt in der Bohrung 33 kontaktiert wird. Zusätzlich wird die Zwangskontaktierung durch den Steg 44 am Endstück 36, welcher als Zentrierring dient, erleichtert, da dadurch ein sicherer Übergang des Schweißdrahtes 13 von der Bohrung 40 auf die Bohrung 33 gewährleistet ist. Zusätzlich wird die Neigung des Endstückes 36 bzw. der Kurvenverlauf des Schweißdrahtes 13 dadurch erreicht, dass die Zuführvorrichtung 32 durch eine so genannte Kombiseele und das erfindungsgemäße Endstück 36 gebildet wird. Demnach besteht die Zuführvorrichtung. 32 bevorzugt im Wesentlichen aus Graphit, wobei die letzten Zentimeter durch eine flexible Spirale 45 aus Metall oder einer Metalllegierung, wie beispielsweise CuA1, ersetzt sind, an welcher das Endstück 36 befestigt wird. Durch diese flexible Anordnung des Endstückes 36 in der Führungsbohrung 34 des Kontaktrohres 30 wird erreicht, dass das Endstück 36 in der Führungsbohrung 34 im Wesentlichen eine Dreh- und/oder Schwenkbewegung ausführen kann. Dadurch kann der Drall, welchen der Schweißdraht 13 besitzt, ausgeglichen werden, indem sich die Position des Endstückes 36 in der Führungsbohrung 34 ändert. Des Weiteren wird durch die Drehbewegung erreicht, dass die Kraft für die Förderung des Schweißdrahtes 13 annähernd konstant bleibt. Dies wirkt sich positiv auf die Schweißeigenschaften und die Haltbarkeit der Verschleißteile, wie Kontaktrohr 30, Endstück 36 oder Zuführvorrichtung 32 aus, da beispielsweise dadurch der Abrieb verringert wird.

Des Weiteren bewirkt die Förderkraft auf den Schweißdraht 13, dass das Endstück 36 bzw. das Verbindungsstück 42 an die stromführende Führungsbohrung 34 des Kontaktrohres 30 gedrückt wird, falls dies noch nicht durch die außermittige Zuführung der Zuführvorrichtung 32 und die daraus resultierende Neigung der Fall ist. Demnach erfolgt ständig ein Stromübergang vom Kontaktrohr 30 auf das elektrisch leitende Endstück 36, so dass stets eine so genannte Sekundärkontaktierung des Schweißdrahtes 13 in der Bohrung 40 des Endstückes 36 erfolgt. Die Sekundärkontaktierung erfolgt also im Endstück 36, wobei die für den Schweißprozess wesentliche Kontaktierung weiterhin im Kontaktrohr 30 erfolgt.

Beispielsweise kann der Drall des Schweißdrahtes 13 jedoch dazu führen, dass keine bzw. nur eine schlechte Kontaktierung im Kontaktrohr 30 stattfindet. Dies kann oftmals zum so genannten "Festbrennen" des Schweißdrahtes 13 führen, wobei der Schweißdraht 13 in der Bohrung 33 mit dem Kontaktrohr 30 verschmilzt und nicht mehr weiter gefördert werden kann. Somit muss der Schweißprozess unweigerlich gestoppt werden. Dieses Festbrennen wird durch die Sekundärkontaktierung im Endstück 36 verhindert, da der Schweißdraht 13 auch dann kontaktiert wird, wenn der Schweißdraht 13 nicht in der Bohrung 33 des Kontaktrohres 30 kontaktiert wird. Vorteilhaft erfolgt hierbei der Stromübergang im Endstück 36 mit einem geringen spezifischen Widerstand, so wie dies auch bei der Kontaktierung im Kontaktrohr 30 der Fall ist. Somit entstehen keine negativen Auswirkungen auf den Schweißprozess, da der Schweißdraht 13 stets mit dem für den Schweißprozess erforderlichen Strom beaufschlagt oder versorgt wird.

Des Weiteren wird der Stromübergang auf den Schweißdraht 13 auf das Kontaktrohr 30 und auf das Endstück 36, also auf zwei Teile aufgeteilt, wodurch sich die Verschleißerscheinungen insgesamt reduzieren und insbesondere die Haltbarkeit des Kontaktrohres 30 verlängert wird. Dieser Stromübergang vom Kontaktrohr 30 auf das Endstück 36 wird zusätzlich dadurch unterstützt, dass bevorzugt das Endstück 36 und das Kontaktrohr 30 aus dem gleichen Material gefertigt sind. Somit ist der Stromübergang auf den Schweißdraht 13 im Bereich des Kontaktrohres 30 konzentriert, wodurch die thermische Belastung auf den Graphitteil der Zuführvorrichtung 32 minimiert wird. Die thermische Belastung wird des Weiteren dadurch minimiert, dass das Material der Zuführvorrichtung 32, insbesondere die flexible Spirale 45, einen hohen thermischen Widerstand besitzt. Somit verändert sich durch die minimierte thermische Belastung der Zuführvorrichtung 32 der Reibkoeffizient im Wesentlichen nicht, woraus eine annähernd konstante Förderung des Schweißdrahtes 13 gewährleistet ist. Ebenso wird dadurch der Abrieb des Schweißdrahtes 13 wesentlich minimiert und das Risiko eines Festbrennens des Schweißdrahtes 13 erheblich gesenkt.

Selbstverständlich kann das erfindungsgemäße Endstück 36 auch direkt mit dem Graphitteil der Zuführvorrichtung 32 verbunden werden und die flexible Spirale 45 entfallen. Dies kann für spezielle Anwendungen bzw. bei Verwendung spezieller Schweißdrähte 13 von Vorteil sein.

Abschließend sei noch erwähnt, dass der Verschleiß des Kontaktrohres 30 aufgrund der hohen Stromdichte beim Schweißvorgang weiterhin gegeben ist. Diese Verschleißerscheinung ist maßgeblich von der erforderlichen Höhe der Stromstärke für einen bestimmten Schweißprozess abhängig. Aus diesem Grund ist es nach einer bestimmten Anzahl von Schweißvorgängen bzw. einer bestimmten Dauer eines oder mehrerer Schweißvorgänge erforderlich, das Kontaktrohr 30 zu ersetzen. Dieser Zyklus wird durch den Einsatz des Endstückes 36 wesentlich verlängert, da das Endstück 36 das "Zuwachsen" des Kontaktrohres 30 mit dem Abrieb des Schweißdrahtes 13 im Wesentlichen verhindert. Selbstverständlich bewirkt das "Zuwachsen" im Endstück 36, dass dieses nach einer bestimmten Zeit getauscht werden muss. Da jedoch die Zuführvorrichtung 32 ebenso einen Verschleißteil darstellt, erfolgt der Wechsel des Endstückes 36 bevorzugt gemeinsam mit dem Wechsel der Zuführvorrichtung 32. Hierbei sei jedoch erwähnt, dass das Kontaktrohr 30 öfter gewechselt werden muss als die Zuführvorrichtung 32.

Daraus resultiert aber auch, dass die Verschleißerscheinungen vom Endstück 36 bzw. der Zuführvorrichtung 32 und dem Kontaktrohr 30 an den Schweißprozess angepasst sind. Das heißt, dass beispielsweise mit jedem zehnten gewechselten Kontaktrohr 30 auch die Zuführvorrichtung 32 mit dem erfindungsgemäßen Endstück 36 gewechselt wird, wobei keine Ressourcen verschwendet werden bzw. kein frühzeitiger Wechsel der Verschleißteile stattfindet.

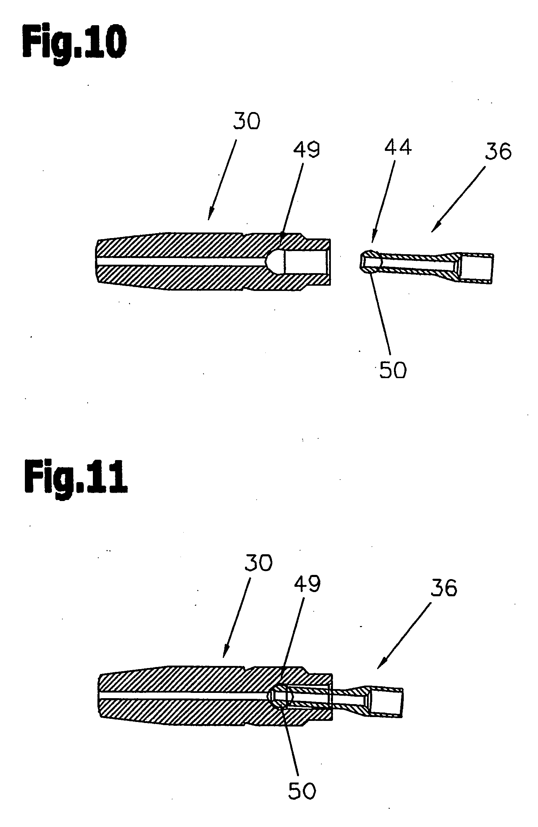

Bei einer weiteren Ausführungsform des aus dem Kontaktrohr 30 und dem Endstück 36 gebildeten Kontaktiersystems für den Schweißdraht 13 gemäß den Fig. 10 und 11 kann das Endstück 36 ebenso einen Teil des Kontaktrohres 30 darstellen. Hierbei ist beispielsweise die konische Verjüngung 35 im Kontaktrohr 30 (siehe Fig. 4) durch eine im Wesentlichen kugelförmige Ausbuchtung 49 ersetzt, welche den gleitenden Übergang für den Schweißdraht 13 in die Bohrung 33 des Kontaktrohres 30 herstellt. Anstelle des Stegs 44 des Endstückes 36 gemäß Fig. 5 ist das Ende des Endstücks 36 gemäß den Fig. 10 und 11 in Form einer Kugel 50 ausgebildet, welche in die Ausbuchtung 49 im Kontaktrohr 30 passt. Dazu ist es selbstverständlich erforderlich, dass der Durchmesser der Ausbuchtung 49 geringfügig größer als der Durchmesser der Kugel 50 ist. Eine sichere Befestigung des Endstückes 36 in der Ausbuchtung 49 kann durch verschiedene mechanische Fixiervorrichtungen, wie beispielsweise durch einen Sicherungsring, erfolgen.

Bis auf die beschriebenen Änderungen des Kontaktrohres 30 und des Endstückes 36 bleiben diese Verschleißteile gemäß der Beschreibung zu den Fig. 1 bis 9 unverändert, so dass die dazugehörige Beschreibung ebenso für diese Ausführungsform herangezogen werden kann.

Somit ist das Kontaktrohr 30 aus zwei Teilen gebildet und stellt ein Verschleißteil dar, wobei die Funktionen der einzelnen Verschleißteile im zweiteiligen Kontaktrohr 30 unverändert kombiniert werden.

Die Zuführvorrichtung 32 könnte auch als dritter Teil des Kontaktrohres 30 aufgenommen werden. Dies ist insbesondere dann von Vorteil, wenn die Verschleißerscheinungen des Kontaktrohres 30, des Endstückes 36 und der Zuführvorrichtung 32 im Wesentlichen identisch sind, so dass ein Wechsel rasch durchgeführt werden kann.

Weiters kann das Kontaktrohr 30 auch einteilig ausgebildet sein, wobei ein an der Drahteintrittseite angeordneter Ansatz mit einer Bohrung für den Schweißdraht 13 angeordnet ist, der durch eine mechanische Bearbeitung verformt wird. Der Ansatz wird also derart verbogen, dass dieser einen bevorzugt gekrümmten Verlauf aufweist und somit eine winkelige Stellung zur Mittelachse'des Kontaktrohres 30 bildet. Damit wird wiederum erreicht, dass der Schweißdraht 13 außermittig schräg zur Mittelachse des Kontaktrohres 30 zugeführt wird und anschließend im mechanisch bearbeiteten Ansatz in Richtung der Bohrung 33 des Kontaktrohres 30 abgelenkt wird, wodurch sich im Ansatz wiederum ein Sekundärkontakt ausbildet. Dabei ist es nicht notwendig, dass das Kontaktrohr 30 neben der Bohrung 33 für den Schweißdraht 13 auch eine Führungsbohrung 34 aufweist. Hierbei kann jedoch im Ansatz ein Teilbereich der Bohrung derart ausgebildet werden, dass die Zuführvorrichtung 32, insbesondere die Seele, in den Ansatz eingeschoben werden kann. Auch kann die Zuführvorrichtung 32 wiederum ein Endstück 36 aufweisen, das in den Ansatz des Kontaktrohres 30 eingeschoben werden kann.

## Patentansprüche

1. Schweißbrenner (10) mit einem Brennerkörper (46), in dem zumindest eine Vorrichtung (32) zur Zuführung eines Schweißdrahts (13) und ein Kontaktrohr (30) mit einer Bohrung (33) und einer konzentrisch dazu verlaufenden Führungsbohrung (34) zur Führung des Schweißdrahtes (13) in Richtung eines Werkstückes (16) angeordnet ist, wobei der Schweißdraht (13) über das Kontaktrohr (30) mit elektrischer Energie versorgbar ist, wobei ein Ende der Zuführvorrichtung (32) in der Führungsbohrung (34) des Kontaktrohres (30) angeordnet und mit einem elektrisch leitfähigen Endstück (36) mit einer Bohrung (40) für den Schweißdraht (13) versehen ist, **dadurch gekennzeichnet, dass** das Endstück (36) der Zuführvorrichtung (32) drehbar und schwenkbar in der Führungsbohrung (34) des Kontaktrohres (30) angeordnet ist.

2. Schweißbrenner (10) nach Anspruch 1, **dadurch gekennzeichnet, dass** zwischen dem Kontaktrohr (30) und dem Endstück (36) eine elektrische Verbindung gebildet ist, so dass im Endstück (36) ein zusätzlicher Stromübergang auf den Schweißdraht (13) mit einem geringen elektrischen Widerstand erfolgt.

3. Schweißbrenner (10) nach Anspruch 1 oder 2, **dadurch gekennzeichnet, dass** die Zuführvorrichtung (32) eine Innenbohrung (41) zur Förderung des Schweißdrahtes (13) aufweist, deren Durchmesser größer als der Durchmesser der Bohrung (40) des Endstückes (36) ist, und der Durchmesser der Bohrung (33) des Kontaktrohres (30) kleiner als jener der Bohrung (40) des Endstückes (36) ist.

4. Schweißbrenner (10) nach einem der Ansprüche 1 bis 3, **dadurch gekennzeichnet, dass** der Durchmesser der Bohrung (40) des Endstückes (36) zwischen 20 bis 50 Prozent, insbesondere 30 Prozent, größer als der Durchmesser des Schweißdrahtes (13) ist.

5. Schweißbrenner (10) nach einem der Ansprüche 1 bis 4, **dadurch gekennzeichnet, dass** die Zuführvorrichtung (32) außermittig am Kontaktrohr (30) angeordnet ist, so dass die Mittelachse der Bohrung (40) des Endstückes (36) gegenüber der Mittelachse der Bohrung (33) des Kontaktrohres (30) eine Neigung aufweist.

6. Schweißbrenner (10) nach einem der Ansprüche 1 bis 5, **dadurch gekennzeichnet, dass** das Endstück (36) an einem Ende einen Übergang (37) zur Aufnahme eines Endes der Zuführvorrichtung (32) aufweist.

7. Schweißbrenner (10) nach Anspruch 6, **dadurch gekennzeichnet, dass** der Übergang (37) durch eine Ausnehmung (38) gebildet ist, deren Durchmesser im Wesentlichen dem Außendurchmesser (39) der Zuführvorrichtung (32) entspricht.

8. Schweißbrenner (10) nach Anspruch 6 oder 7, **dadurch gekennzeichnet, dass** der Übergang (37) des Endstücks (36) fest mit der Zuführvorrichtung (32) verbindbar ist.

9. Schweißbrenner (10) nach Anspruch 6 oder 7, **dadurch gekennzeichnet, dass** der Übergang (37) des Endstücks (36) lösbar mit der Zuführvorrichtung (32) verbindbar ist.

10. Schweißbrenner (10) nach einem der Ansprüche 1 bis 9, **dadurch gekennzeichnet, dass** das Endstück (36) an jenem, dem Übergang (37) gegenüberliegenden Ende, einen Steg (44) aufweist.

11. Schweißbrenner (10) nach Anspruch 10, **dadurch gekennzeichnet, dass** der Steg (44) als Zentrierring für die Führungsbohrung (34) ausgebildet ist, wobei der Außendurchmesser des Stegs (44) geringfügig kleiner als der Durchmesser der Führungsbohrung (34) des Kontaktrohres (30) ist.

12. Schweißbrenner (10) nach Anspruch 10 oder 11, **dadurch gekennzeichnet, dass** der Steg (44) und der Übergang (37) durch ein Verbindungsstück (42) miteinander verbunden sind.

13. Schweißbrenner (10) nach Anspruch 12, **dadurch gekennzeichnet, dass** das Verbindungsstück (42) einen geringeren Außendurchmesser als der Steg (44) aufweist.

14. Schweißbrenner (10) nach einem der Ansprüche 10 bis 13, **dadurch gekennzeichnet, dass** der Außendurchmesser des Endstücks (36) vom Übergang (37) in Richtung des Steges (44) zum Verbindungsstück (42) verjüngend ausgebildet ist.

15. Schweißbrenner (10) nach einem der Ansprüche 7 bis 14, **dadurch gekennzeichnet, dass** die Ausnehmung (38) konisch in die Bohrung (40) des Endstückes (36) übergeht.

16. Schweißbrenner (10) nach einem der Ansprüche 1 bis 15, **dadurch gekennzeichnet, dass** der Steg (44) des Endstücks (36) vollständig und ein Teilbereich des Verbindungsstückes (42) des Endstückes (36) in die Führungsbohrung (34) des Kontaktrohres (30) hineinragt.

17. Schweißbrenner (10) nach einem der Ansprüche 1 bis 16, **dadurch gekennzeichnet, dass** die Zuführvorrichtung (32) zumindest im Bereich der Befestigung am Endstück (36) flexibel, insbesondere durch eine flexible Spirale (45), ausgebildet ist.

18. Schweißbrenner (10) nach einem der Ansprüche 1 bis 17, **dadurch gekennzeichnet, dass** die Zuführvorrichtung (32) zumindest im Bereich der Befestigung am Endstück (36) durch ein Material mit einem hohen thermischen Widerstand gebildet ist.

19. Kontaktiersystem, gebildet aus einem Endstück (36) und einem Kontaktrohr (30), wobei das Endstück (36) mit einer Bohrung (40) und das Kontaktrohr (30) mit einer Führungsbohrung (34) zur Führung eines Schweißdrahtes (13) versehen ist, **dadurch gekennzeichnet, dass** das Kontaktrohr (30) eine im Wesentlichen kugelförmige Ausbuchtung (49) aufweist, und das der Ausbuchtung (49) des Kontaktrohres (30) zugewandte Ende des Endstücks (36) für eine drehbare und schwenkbare Verbindung in der Führungsbohrung (34) des Kontaktrohres (30) ausgebildet ist.

20. Kontaktiersystem nach Anspruch 19, **dadurch gekennzeichnet, dass** des Ende des Endstücks (36) in Form einer Kugel (50) augebildet ist.

21. Kontaktrohr (30) mit einer Bohrung (33) für den Schweißdraht (13) und einer Führungsbohrung (34) zur Aufnahme des zugeführten Schweißdrahts (13) und Weiterleitung an die Bohrung (33), **dadurch gekennzeichnet, dass** der Übergang zwischen der Führungsbohrung (34) und der Bohrung (33) durch eine Ausbuchtung (49) zur drehbaren und schwenkbaren Aufnahme eines Endstückes (36) einer Vorrichtung (32) zur Zuführung eines Schweißdrahtes (13) ausgebildet ist.

22. Kontaktrohr (30) nach Anspruch 21, **dadurch gekennzeichnet, dass** die Ausbuchtung (49) im Wesentlichen kugelförmig zur Aufnahme einer Kugel (50) am Endstück (36) ausgebildet ist.

23. Kontaktrohr (30) nach Anspruch 22, **dadurch gekennzeichnet, dass** der Durchmesser der Kugel (50) geringfügig kleiner als der Durchmesser der Ausbuchtung (49) ist.

24. Kontaktrohr (30) nach einem der Ansprüche 21 bis 23 für einen Schweißbrenner nach einem der Ansprüche 1 bis 18 für ein Kontaktiersystem nach einem der Ansprüche 19 bis 20.

## Claims

1. A welding torch (10) having a torch body (46), in which at least one device (32) for feeding a welding wire (13) and a contact tube (30) having a bore (33) and a guide bore (34), running concentrically thereto, for guiding the welding wire (13) in the direction of a work piece (16), are arranged, wherein the welding wire (13) can be supplied with electrical energy via the contact tube (30), wherein one end of the feed device (32) is arranged in the guide bore (34) of the contact tube (30) and is provided with an electrically conductive end piece (36) having a bore (40) for the welding wire (13), **characterised in that** the end piece (36) of the feed device (32) is rotatably and pivotally arranged in the guide bore (34) of the contact tube (30).

2. The welding torch (10) according to claim 1, **characterised in that** an electrical connection is formed between the contact tube (30) and the end piece (36) so that there is an additional current transition within the end piece (36) to the welding wire (13) with a low electrical resistance.

3. The welding torch (10) according to claim 1 or 2, **characterised in that** the feed device (32) has an inner bore (41) for conveying the welding wire (13), the diameter of said inner bore being larger than the diameter of the bore (40) of the end piece (36), and the diameter of the bore (33) of the contact tube (30) being smaller than that of the bore (40) of the end piece (36).

4. The welding torch (10) according to any one of claims 1 to 3, **characterised in that** the diameter of the bore (40) of the end piece (36) is larger than the diameter of the welding wire (13) by between 20 and 50 percent, particularly 30 percent.

5. The welding torch (10) according to any one of claims 1 to 4, **characterised in that** the feed device (32) is eccentrically arranged on the contact tube (30) such that the central axis of the bore (40) of the end piece (36) is inclined relative to the central axis of the bore (33) of the contact tube (30).

6. The welding torch (10) according to any one of claims 1 to 5, **characterised in that** the end piece (36), at one end, has a transition zone (37) for receiving one end of the feed device (32).

7. The welding torch (10) according to claim 6, **characterised in that** the transition zone (37) is formed by a recess (38), the diameter of which substantially corresponds to the outside diameter (39) of the feed device (32).

8. The welding torch (10) according claim 6 or 7, **characterised in that** the transition zone (37) of the end piece (36) is fixedly connectable to the feed device (32).

9. The welding torch (10) according to claim 6 or 7, **characterised in that** the transition zone (37) of the end piece (36) is detachably connectable to the feed device (32).

10. The welding torch (10) according to any one of claims 1 to 9, **characterised in that** the end piece (36) has a web (44) on the end opposing the transition zone (37).

11. The welding torch (10) according to claim 10, **characterised in that** the web (44) is designed as a centring ring for the guide bore (34), the outside diameter of the web (44) being slightly smaller than the diameter of the guide bore (34) of the contact tube (30).

12. The welding torch (10) according to claim 10 or 11, **characterised in that** the web (44) and the transition zone (37) are connected with each other via a connecting member (42).

13. The welding torch (10) according to claim 12, **characterised in that** the connecting member (42) has a smaller outside diameter than the web (44).

14. The welding torch (10) according to any one of claims 10 to 13, **characterised in that** the outside diameter of the end piece (36) is designed to be tapering from the transition zone (37) in the direction of the web (44) towards the connecting member (42).

15. The welding torch (10) according to any one of claims 7 to 14, **characterised in that** the recess (38) conically passes into the bore (40) of the end piece (36).

16. The welding torch (10) according to any one of claims 1 to 15, **characterised in that** the whole web (44) of the end piece (36) and a portion of the connecting member (42) of the end piece (36) project into the guide bore (34) of the contact tube (30).

17. The welding torch (10) according to any one of claims 1 to 16, **characterised in that** the feed device (32), at least in the region of the fixing thereof to the end piece (36), is designed to be flexible, particularly as a flexible coil (45).

18. The welding torch (10) according to any one of claims 1 to 17, **characterised in that** the feed device (32), at least in the region of the fixing thereof to the end piece (36), is formed by a material having a high thermal resistance.

19. A contacting system formed by an end piece (36) and a contact tube (30), wherein the end piece (36) has a bore (40) and the contact tube (30) has a guide bore (34) for guiding a welding wire (13), **characterised in that** the contact tube (30) has a substantially spherical dent (49), and the end of the end piece (36) which faces the dent (49) of the contact tube (30) is designed for a rotatable and pivotable connection within the guide bore (34) of the contact tube (30).

20. The contacting system according to claim 19, **characterised in that** the end of the end piece (36) is designed in the form of a sphere (50).

21. A contact tube (30) having a bore (33) for the welding wire (13) and a guide bore (34) for receiving the welding wire (13) fed and for forwarding the latter to the bore (33), **characterised in that** the transition zone between the guide bore (34) and the bore (33) is formed by a dent (49) for rotatably and pivotally receiving an end piece (36) of a device (32) for feeding a welding wire (13).

22. The contact tube (30) according to claim 21, **characterised in that** the dent (49) is designed to be substantially spherical for receiving a sphere (50) on the end piece (36).

23. The contact tube (30) according to claim 22, **characterised in that** the diameter of the sphere (50) is slightly smaller than the diameter of the dent (49).

24. The contact tube (30) according to any one of claims 21 to 23 for a welding torch according to any one of claims 1 to 18 for a contacting system according to any one of claims 19 to 20.

## Revendications

1. Chalumeau de soudage (10), comprenant un corps de chalumeau (46), dans lequel on agence au moins un dispositif (32) pour acheminer un fil d'apport (13) et un tube contact (30) avec un perçage (33) et un perçage de guidage (34) s'étendant concentriquement à celui-ci pour acheminer le fil d'apport (13) en direction d'une pièce (16), dans lequel le fil d'apport (13) peut être alimenté en énergie électrique via le tube contact (30), dans lequel une extrémité du dispositif d'acheminement (32) est agencée dans le perçage de guidage (34) du tube contact (30) et est pourvue d'une pièce d'extrémité électroconductrice (36) avec un perçage (40) pour le fil d'apport (13), **caractérisé en ce que** la pièce d'extrémité (36) du dispositif d'acheminement (32) est montée à rotation et à pivotement dans le perçage de guidage (34) du tube contact (30).

2. Chalumeau de soudage (10) selon la revendication 1, **caractérisé en ce qu'**entre le tube contact (30) et la pièce d'extrémité (36) est formée une connexion électrique de manière à assurer dans la pièce d'extrémité (36) un passage de courant supplémentaire sur le fil d'apport (13) présentant une faible résistance électrique.

3. Chalumeau de soudage (10) selon la revendication 1 ou 2, **caractérisé en ce que** le dispositif d'acheminement (32) présente un perçage interne (41) pour transporter le fil d'apport (13), dont le diamètre est supérieur à celui du perçage (40) de la pièce d'extrémité (36), et **en ce que** le diamètre du perçage (33) du tube contact (30) est inférieur à celui du perçage (40) de la pièce d'extrémité (36).

4. Chalumeau de soudage (10) selon l'une quelconque des revendications 1 à 3, **caractérisé en ce que** le diamètre du perçage (40) de la pièce d'extrémité (36) est 20 à 50 pour cent, en particulier 30 pour cent, supérieur au diamètre du fil d'apport (13).

5. Chalumeau de soudage (10) selon l'une quelconque des revendications 1 à 4, **caractérisé en ce que** le dispositif d'acheminement (32) est agencé de manière excentrée sur le tube contact (30), de sorte que l'axe central du perçage (40) de la pièce d'extrémité (36) présente une inclinaison par rapport à l'axe central du perçage (33) du tube contact (30).

6. Chalumeau de soudage (10) selon l'une quelconque des revendications 1 à 5, **caractérisé en ce que** la pièce d'extrémité (36) présente, à une extrémité, un passage (37) pour recevoir une extrémité du dispositif d'acheminement (32).

7. Chalumeau de soudage (10) selon la revendication 6, **caractérisé en ce que** le passage (37) est formé par un évidement (38), dont le diamètre correspond sensiblement au diamètre externe (39) du dispositif d'acheminement (32).

8. Chalumeau de soudage (10) selon la revendication 6 ou 7, **caractérisé en ce que** le passage (37) de la pièce d'extrémité (36) peut être relié de manière fixe au dispositif d'acheminement (32).

9. Chalumeau de soudage (10) selon la revendication 6 ou 7, **caractérisé en ce que** le passage (37) de la pièce d'extrémité (36) peut être relié de manière détachable au dispositif d'acheminement (32).

10. Chalumeau de soudage (10) selon l'une quelconque des revendications 1 à 9, **caractérisé en ce que** la pièce d'extrémité (36) présente une nervure (44) à son extrémité opposée au passage (37).

11. Chalumeau de soudage (10) selon la revendication 10, **caractérisé en ce que** la nervure (44) se présente sous la forme d'une bague de centrage pour le perçage de guidage (34), dans lequel le diamètre externe de la nervure (44) est légèrement inférieur au diamètre du perçage de guidage (34) du tube contact (30).

12. Chalumeau de soudage (10) selon la revendication 10 ou 11, **caractérisé en ce que** la nervure (44) et le passage (37) sont reliés l'un à l'autre par une pièce de raccordement (42).

13. Chalumeau de soudage (10) selon la revendication 12, **caractérisé en ce que** la pièce de raccordement (42) présente un diamètre externe inférieur à celui de la nervure (44).

14. Chalumeau de soudage (10) selon l'une quelconque des revendications 10 à 13, **caractérisé en ce que** le diamètre externe de la pièce d'extrémité (36) se rétrécit à partir du passage (37) en direction de la nervure (44) à la pièce de raccordement (42).

15. Chalumeau de soudage (10) selon l'une quelconque des revendications 7 à 14, **caractérisé en ce que** l'évidement (38) se fond en forme conique dans le perçage (40) de la pièce d'extrémité (36).

16. Chalumeau de soudage (10) selon l'une quelconque des revendications 1 à 15, **caractérisé en ce que** la nervure (44) de la pièce d'extrémité (36) en totalité et une zone partielle de la pièce de raccordement (42) de la pièce d'extrémité (36) entrent dans le perçage de guidage (34) du tube contact (30).

17. Chalumeau de soudage (10) selon l'une quelconque des revendications 1 à 16, **caractérisé en ce que** le dispositif - d'acheminement (32) est formé au moins dans la zone de la fixation sur la pièce d'extrémité (36) de manière flexible, en particulier par une spirale flexible (45).

18. Chalumeau de soudage (10) selon l'une quelconque des revendications 1 à 17, **caractérisé en ce que** le dispositif d'acheminement (32) est formé au moins dans la zone de la fixation sur la pièce d'extrémité (36) par un matériau ayant une résistance thermique élevée.

19. Système de mise en contact, formé d'une pièce d'extrémité (36) et d'un tube contact (30), dans lequel la pièce d'extrémité (36) est pourvue d'un perçage (40) et le tube contact (30) est pourvu d'un perçage de guidage (34) pour acheminer un fil d'apport (13), **caractérisé en ce que** le tube contact (30) présente un renflement (49) sensiblement sphérique et **en ce que** l'extrémité, tournée vers le renflement (49) du tube contact (30), de la pièce d'extrémité (36) est formée pour permettre un raccordement rotatif et pivotant dans le perçage de guidage (34) du tube contact (30).

20. Système de mise en contact selon la revendication 19, **caractérisé en ce que** l'extrémité de la pièce d'extrémité (36) se présente sous la forme d'une bille (50).

21. Tube contact (30), comprenant un perçage (33) pour le fil d'apport (13) et un perçage de guidage (34) pour recevoir le fil d'apport acheminé (13) et le transférer au perçage (33), **caractérisé en ce que** le passage entre le perçage de guidage (34) et le perçage (33) est formé d'un renflement (49) pour la réception à rotation et à pivotement d'une pièce d'extrémité (36) d'un dispositif (32) pour acheminer un fil d'apport (13).

22. Tube contact (30) selon la revendication 21, **caractérisé en ce que** le renflement (49) se présente sous une forme sensiblement sphérique pour recevoir une bille (50) sur la pièce d'extrémité (36).

23. Tube contact (30) selon la revendication 22, **caractérisé en ce que** le diamètre de la bille (50) est légèrement inférieur à celui du renflement (49).

24. Tube contact (30) selon l'une quelconque des revendications 21 à 23 pour un chalumeau de soudage selon l'une quelconque des revendications 1 à 18 pour un système de mise en contact selon l'une quelconque des revendications 19 à 20.
